# EUROPÄISCHE PATENTANMELDUNG

(11) **EP 3 599 086 A1**
(43) Veröffentlichungstag der Anmeldung: **29.01.2020**
(21) Anmeldenummer: 19188573.0
(22) Anmeldetag: 26.07.2019
(51) Int. Cl.: B30B 5/06, B32B 37/10

(54) **GLEITFLÄCHENDICHTUNG FÜR EINE KONTINUIERLICH ARBEITENDE DOPPELBANDPRESSE UND DOPPELBANDPRESSE**

(30) Priorität: 27.07.2018 DE 102018118212
(71) Anmelder: Held Technologie GmbH, 78647 Trossingen-Schura (DE)
(72) Erfinder: Blickle, Gerhard, 78647 Trossingen (DE); Fisel, Richard, 78647 Trossingen-Schura (DE); Gosda, Jörg, 78647 Trossingen (DE); Pfeffer, Salvador, 72336 Balingen-Endingen (DE)
(74) Vertreter: Patentanwälte Behrmann Wagner PartG mbB

(57) **Zusammenfassung**

Gleitflächendichtung (01) für eine Doppelbandpresse zur Herstellung von endlosen Materialbahnen, wie Laminaten, mit einem oberen und einem unteren endlosen Pressband (04), wobei zwischen den einander gegenüberliegenden Außenseiten der Pressbänder eine Reaktionszone (13) gebildet wird, in der die Materialbahn geführt und unter einem Flächendruck verpresst wird, mit einer den Flächendruck erzeugenden Druckkammer (08), die zwischen einem Grundelement (07), insbesondere einer Heizplatte, und einer Innenseite (11) des Pressbands (04) in der Reaktionszone (13) ausgebildet ist, welche mit einem fluiden Druckmittel beaufschlagbar ist und durch die zumindest eine ringförmige, in sich geschlossene Gleitflächendichtung (01) seitlich begrenzt und abgedichtet wird, wobei die Gleitflächendichtung (01) eine Dichtfläche (12) zur dichtenden Anlage an der Innenseite (11) des Pressbands (04) aufweist und die Gleitflächendichtung (01) ein die Dichtfläche (12) ausbildendes Dichtelement (02) und einen das Dichtelement (02) aufnehmenden Dichtrahmen (03) zur beweglichen Lagerung der Gleitflächendichtung (01) im Grundelement (07) aufweist, wobei zwischen Dichtrahmen (03) und Dichtelement (02) in einer Anpressrichtung ein Kompressionselement (17), z.B. ein O-Ring oder eine Dichtschnur, angeordnet ist, welches durch eine elastische Kompression, eine Relativbewegung des Dichtelements (02) gegenüber dem Dichtrahmen (03) ermöglicht.

## Beschreibung

Die Erfindung betrifft eine Gleitflächendichtung für eine kontinuierlich arbeitende Doppelbandpresse zur Herstellung von endlosen Materialbahnen, wie Laminaten, insbesondere Kupferlaminat, Dekorlaminat, faserverstärkte Kunststofflaminate und/oder andere technische Laminate, mit einem oberen und einem unteren über Umlenkrollen geführten, endlosen Pressband, wobei zwischen den einander gegenüberliegenden Außenseiten der Pressbänder eine Reaktionszone gebildet wird, in der die Materialbahn geführt und unter einem Flächendruck verpresst wird, mit einer zumindest teilweise den Flächendruck erzeugenden Druckkammer, die zwischen einem Grundelement, insbesondere einer Heizplatte, und einer Innenseite des Pressbandes in der Reaktionszone ausgebildet ist, welche mit einem fluiden Druckmittel beaufschlagbar ist und durch die zumindest eine ringförmige, in sich geschlossene Gleitflächendichtung seitlich begrenzt und abgedichtet wird, wobei die Gleitflächendichtung eine Dichtfläche zur dichtenden Anlage an der Innenseite des Pressbands aufweist und die Gleitflächendichtung eine die Dichtfläche ausbildendes Dichtelement und einen das Dichtelement zumindest teilweise aufnehmenden Dichtrahmen zur beweglichen Lagerung der Gleitflächendichtung in dem Grundelement, insbesondere in der Heizplatte, aufweist.

Außerdem betrifft die vorliegende Erfindung eine kontinuierlich arbeitende Doppelbandpresse gemäß dem Oberbegriff des Anspruchs 13.

Kontinuierlich arbeitende Doppelbandpressen zum Miteinanderverpressen von Substraten oder Materialbahnen und der Einsatz von Gleitflächendichtungen zum Abdichten einer Druckkammer zwischen den Pressbändern der Doppelbandpresse und einem Grundelement, insbesondere Heizelement, sind hinlänglich bekannt und beispielsweise in den Druckschriften DE 41 28 024 A1 sowie DE 42 19 226 C2 beschrieben. Die in sich geschlossenen Gleitflächendichtungen bilden dabei, bezogen auf die Rotationsrichtung bzw. Umlaufrichtung der Pressbänder Abschnitte aus, die längs der Umlaufrichtung oder Rotationsrichtung verlaufen, sowie Bereiche, insbesondere im Ein- und Austrittsbereich der Presse bzw. der Pressbänder, die quer zur Rotationsrichtung oder Umlaufrichtung der Pressbänder verlaufen.

Im Zusammenhang mit den Gleitflächendichtungen bestehen dabei im Stand der Technik unterschiedliche Probleme. Im Ein- und Austrittsbereich der Presse können die dort quer verlaufenden Abschnitte der Gleitflächendichtungen aufgrund der Steifigkeit der Dichtung sowie aufgrund von Fertigungs- und Montagetoleranzen ggf. lokal unterschiedliche Drücke auf die Rückseite des Pressbandes oder auf die Innenseite des Pressbandes ausüben, was dazu führt, dass auf dem fertigen Produkt oder der hergestellten Materialbahn, insbesondere bei empfindlichen Produkten Beeinträchtigungen entstehen können, die sich im fertigen Produkt, insbesondere durch sichtbare Längsstreifen manifestieren.

Ein weiterer Nachteil an den bekannten Gleitflächendichtungen und den bekannten kontinuierlich arbeitenden Doppelbandpressen besteht darin, dass es mit den bekannten Doppelbandpressen und den bekannten Gleitflächendichtungen bisher nur möglich war, Materialbahnen mit einem Unterformat zu bearbeiten und/oder zu verpressen, wenn das unterformatige Material sehr dünn, beispielsweise nur wenige Zehntel Millimeter dünn war. Von einem Unterformat spricht der Fachmann, wenn die Breite der zu verpressenden Materialbahnen geringer ausfällt als der Abstand der längs verlaufenden Abschnitte der Gleitflächendichtung der Doppelbandpresse. Die Herstellung von Unterformat-Materialbahnen war bisher auch deshalb kaum möglich oder hoch problematisch, da insbesondere im Ein- und Austrittsbereich der Presse die querverlaufenden Abschnitte der Gleitflächendichtung dem Verlauf, insbesondere dem S-förmigen Verlauf der Pressbänder, um die seitlichen Kanten der Materialbahnen oder des Pressguts aufgrund der Steifigkeit der Gleitflächendichtung nicht folgen konnten und es in Folge dessen zu einer unzulässig hohen Leckage von fluidem Druckmittel aus der Druckkammer kam. Der Wunsch nach Doppelbandpressen, insbesondere kontinuierlich arbeitenden Doppelbandpressen, mit denen jedoch auch Pressgut oder Materialbahnen mit Unterformat verarbeitet oder hergestellt werden kann, ist jedoch besonders groß, da sonst für ein entsprechend kleineres Format, insbesondere für eine entsprechend kleinere Breite des Pressguts oder der Materialbahnen eine entsprechend dimensionierte Doppelbandpresse angeschafft und betrieben werden muss, bei der die Abstände der Gleitflächendichtung in den Längsabschnitten an die Breite des Pressguts oder der Materialbahnen angepasst ist. Außerdem führt das grundsätzliche Betreiben von Doppelbandpressen mit Pressgut im Überformat, also mit einem seitlichen Überstand des Pressguts bzw. der Materialbahnen über die Breite der Gleitflächendichtung in den Längsabschnitt zu einem hohen Ausmaß an Ausschuss, da zwar mit dem Übermaß die Leckage von fluidem Druckmittel aus der Druckkammer vermieden wird, da sich die Gleitflächendichtung, insbesondere in dem Ein- und Austrittsbereich nicht an eine entsprechende Kontur anpassen muss, die jenseits bzw. außerhalb der Gleitflächendichtung durch die Doppelbandpresse geführten Bereiche der Materialbahnen oder des Pressguts werden jedoch nicht mit einem ausreichenden Flächendruck verpresst und nicht mit dem gewünschten oder benötigten Temperaturverlauf beaufschlagt und bilden dementsprechend zwangsläufig entsprechenden Ausschuss, der von dem hergestellten Materialbahnen absepariert und entsorgt werden muss.

Ausgehend von diesem Stand der Technik liegt die Aufgabe der vorliegenden Erfindung darin, Gleitflächendichtungen für kontinuierlich arbeitende Doppelbandpressen sowie entsprechende Doppelbandpressen vorzuschlagen, die einen flexibleren Einsatz bzgl. der Breiten der zu verpressenden Materialbahnen oder des zu verpressenden Pressguts erlauben und gleichzeitig ein verbessertes Arbeitsergebnis, insbesondere qualitativ hochwertigere Materialbahnen ermöglichen.

Diese Aufgabe wird hinsichtlich der Gleitflächendichtung für eine kontinuierlich arbeitende Doppelbandpresse mit den Merkmalen des Anspruchs 1 gelöst, d.h. bei einer gattungsgemäßen Gleitflächendichtung dadurch, dass zwischen dem Dichtrahmen und dem Dichtelement zumindest in einer Anpressrichtung ein Kompressionselement angeordnet ist, welches durch eine elastische Kompression, insbesondere eine zumindest teilweise elastische Kompression, insbesondere in Reaktion auf eine Druckbeaufschlagung der Gleitflächendichtung in Anpressrichtung, eine Relativbewegung des Dichtelements gegenüber dem Dichtrahmen ermöglicht.

Dadurch wird in besonders vorteilhafter Weise erreicht, dass die Gleitflächendichtung in erheblichem Maße an lokaler Flexibilität gewinnt, sodass insbesondere in den Ein- und Austrittsbereichen der Doppelbandpresse die Gleitflächendichtungen, insbesondere die Dichtflächen der Gleitflächendichtungen optimal an den Verlauf der jeweiligen Pressbänder angepasst werden können und dadurch einerseits eine gleichmäßige Druckbeaufschlagung der Innenseite der Pressbänder ermöglicht wird und gleichzeitig eine hervorragende Dichtwirkung erzeugt wird, selbst wenn die Doppelbandpresse Pressgut mit einem Unterformat verpresst.

Der Grundgedanke der vorliegenden Erfindung basiert also auf der Erkenntnis, dass ein zwischen dem Dichtelement und dem Dichtrahmen angeordnetes Kompressionselement eine Flexibilisierung, insbesondere eine lokale Flexibilisierung der Dichtelemente ermöglicht, sodass in Reaktion auf eine rückseitige oder vom Grundelement ausgehende Druckbeaufschlagung der Gleitflächendichtung ein insgesamt homogener Anpressdruck auf die Innenseite des Pressbands ausgeübt werden kann und darüber hinaus durch eine lokal unterschiedliche Kompression des Kompressionselements oder eine lokal unterschiedlich stark ausgeprägte Kompression des Kompressionselements einem Verlauf einer Innenseite eines Pressbandes durch die Gleitflächendichtung besser gefolgt werden kann und dennoch ein homogener Anpressdruck erreicht werden kann, der insbesondere so groß ausfällt, dass keine nachteilige oder ungewünschte Leckage von Druckmittel aus der Druckkammer zu beobachten ist.

Damit wird einerseits erreicht, dass unter Einsatz der erfindungsgemäßen Gleitflächendichtungen Doppelbandpressen auch mit Unterformat-Pressgut betrieben und ein qualitativ hochwertiges Ergebnis erzeugt werden kann.

Gemäß einer ersten vorteilhaften Ausführungsform der Gleitflächendichtung kann vorgesehen sein, dass das Kompressionselement als in sich geschlossener O-Ring ausgebildet ist. Eine derartige Ausgestaltung des Kompressionselements hat sich bezüglich der lokalen Flexibilisierung des Dichtelements gegenüber dem Dichtrahmen sowie bezüglich einer homogenen Druckbeaufschlagung der Innenseiten der Pressbänder als besonders vorteilhaft herausgestellt. Alternativ zu einem geschlossenen O-Ring kann auch eine zu einem Ring gelegte Rundschnur oder eine eingelegte nicht geschlossene Dichtschnur mit kreisförmigen Querschnitt zum Einsatz kommen. Die letztgenannte Ausbildung ist vorteilhaft, um die thermische Ausdehnung des Kompressionselements zu berücksichtigen oder zu kompensieren.

Bezüglich der Anordnung des Kompressionselements soll einerseits gewährleistet werden, dass die gewünschte oder gewollte Flexibilisierung des Dichtelements oder der Dichtfläche des Dichtelements erreicht wird, gleichzeitig jedoch die Stabilität der Gleitflächendichtung, insbesondere auch die Stabilität der Lagerung des Dichtelements in dem Dichtrahmen nicht über Gebühr beeinträchtigt wird. Diese Anforderungen werden in einer weiteren besonders vorteilhaften Ausführungsform der Gleitflächendichtung realisiert, gemäß der der Dichtrahmen eine Nut zur Aufnahme des Dichtelements aufweist, wobei entlang eines Nutgrundes des Dichtrahmens das Kompressionselement angeordnet ist. Damit wird das Kompressionselement in zwei von drei Raumrichtungen weitestgehend fixiert und stabilisiert. Denn das Kompressionselement ist bei einer derartigen Anordnung an drei von vier Umfangsseiten von dem Dichtrahmen aufgenommen und geführt und wird an einer vierten Umfangsseite von dem Dichtelement fixiert oder in seiner Beweglichkeit eingeschränkt.

In einer wieteren vorteilhaften Ausgestaltung ist vorgesehen, dass das Dichtelement zumindest teilweise oder abschnittsweise aus einem Werkstoff mit geringem E-Modul, insbesondere einem Polymer oder Metall gefertigt sind. Dabei ist es besonders sinnvoll, das Dichtelement im Bereich der Ein- und Austrittsbereiche der Doppelbandpresse mit dem entsprechenden Polymer- oder Metallwerkstoff auszuführen. Denn in diesem Bereich ist eine die dem Erfindungsgedanken wiedergebende Flexibilisierung, insbesondere die lokale oder punktuelle Flexibilisierung der Gleitflächendichtung, insbesondere der Dichtelemente von besonderer Bedeutung für die Verpressung von Unterformatmaterialbahnen sowie zur Erzeugung qualitativ hochwertigen Pressguts. Dementsprechend kann das Dichtelement so ausgestaltet werden, dass selektiv in den Bereichen des Dichtelements, welche die quer zur Rotationsrichtung oder Umlaufrichtung der Pressbänder verlaufenden Abschnitte des Dichtelements bilden der Polymerwerkstoff zum Einsatz kommen. Aber auch ein insgesamt aus einem Polymer mit einem geringen E-Modul gefertigtes Dichtelement kann die vorangehend genannten Vorteile realisieren.

Die Realisierung der erfindungsgemäßen Gleitflächendichtungen umfassend das zwischen dem Dichtelement und dem Dichtrahmen angeordnete Kompressionselement, birgt eine besondere Herausforderung bezüglich der Sicherung oder Befestigung des Dichtelements gegenüber dem Dichtrahmen. Dies trifft insbesondere auf die Abschnitte oder Bereiche der Gleitflächendichtung zu, welche in Umlaufrichtung oder Rotationsrichtung der Pressbänder angeordnet sind. Mit anderen Worten ausgedrückt bedeutet dies, dass abseits der Ein- und Austrittsbereiche der Presse die Dichtelemente durch die Bewegung der Pressbänder einer enormen Schubkraft ausgesetzt sind, insbesondere, wenn berücksichtigt wird, dass die Dichtflächen der Gleitflächendichtung je nach Höhe des entsprechenden Drucks, beispielsweise in der Druckkammer, mit einem Druck von bis zu 200 bar oder 20N/mm² gegen die Innenseite des Pressbands gedrückt werden. Da es beispielsweise zum Trockenlaufen oder zu Verkrustungen zwischen
dem Pressband und dem Dichtelement kommen kann, besteht grundsätzlich die Gefahr, dass die Dichtelemente in Rotations- oder Umlaufrichtung der Presse von den Pressbändern mitgenommen oder verschoben werden und die Gleitflächendichtung dadurch zumindest undicht wird, oder aber sogar beschädigt wird.

Um dieser Problematik bezüglich der Sicherung oder Befestigung der Dichtelemente zu begegnen sieht eine weitere, besonders bevorzugte Ausgestaltung der Gleitflächendichtung vor, dass das Dichtelement zumindest abschnittsweise auf einer an der Dichtfläche angrenzenden Seitenfläche Sacklöcher oder Einfräsungen aufweisen, wobei der Dichtrahmen Verstemmungen aufweist, die zumindest teilweise in die Sacklöcher eingreifen und eine Sicherung des Dichtelements gegenüber dem Dichtrahmen bewirken. Durch die Sacklöcher oder Einfräsungen und die entsprechend vorgesehenen Verstemmungen des Dichtrahmens wird sichergestellt, dass die von dem Pressband auf die Dichtfläche und damit auf das Dichtelement ausgeübten Schubkräfte sicher in die Unterkonstruktion, insbesondere in den entsprechend massiven und stabilen Dichtrahmen eingeleitet werden können, ohne dass die Gefahr besteht, dass die Dichtelemente beschädigt, verschoben werden. Einfräsungen können bevorzugt bei Dichtelementen aus Metall, insbesondere Bronze, zum Einsatz kommen. Die Verstemmungen können beispielsweise punktförmige Verstemmungen ausbilden, welche an einem oberen Ende einer seitlichen Kante des Dichtrahmens derart eingebracht werden, dass der Dichtrahmen zumindest punktuell im Bereich des Sacklochs derart verformt wird, dass in dem verstemmten Bereich Material des Dichtrahmens zumindest zum Teil in das Sackloch des Dichtelements hineinragt.

In diesem Zusammenhang ist gemäß einer ganz besonders vorteilhaften Ausführungsform vorgesehen, dass die Sacklöcher und die Verstemmung so zueinander dimensioniert sind, dass die Relativbewegung des Dichtelements gegenüber dem Dichtrahmen durch eine Kompression des Kompressionselements bis zu einem Maximalhub ermöglicht und darüber hinaus eine Sicherung des Dichtelements gegenüber dem Dichtrahmen bewirkt wird. Abgesehen von dem vorgesehenen Maximalhub des Dichtelements senkrecht zur Dichtfläche oder in Anpressrichtung kann die Dimensionierung von Sackloch und Verstemmung in Längsrichtung, insbesondere in Umfangsrichtung des Dichtelements so ausgestaltet sein, dass keine oder nur eine minimale Relativbewegung zwischen Dichtelement und Dichtrahmen toleriert wird. Dementsprechend kann also beispielsweise vorgesehen sein, dass das Sackloch die Form eines Langlochs ausbildet, welches sich auf der Seitenfläche entlang der Anpressrichtung erstreckt, wobei die Breite des Langlochs gerade so gewählt wird, dass sie im Wesentlichen von dem im Rahmen der Verstemmung verformten Material des Dichtrahmens ausgefüllt oder annähernd ausgefüllt wird, wohingegen die Länge des Langlochs gerade so gewählt wird, dass der entsprechende Maximalhub des Dichtelements in Anpressrichtung in Reaktion auf eine Verformung des Kompressionselements ermöglicht wird.

In Bezug auf die erfindungsgemäße kontinuierlich arbeitende Doppelbandpresse wird die oben bereits genannte Aufgabe durch eine Doppelbandpresse zur Herstellung von endlosen Materialbahnen, wie Laminaten, insbesondere Kupferlaminat, Dekorlaminat, faserverstärkte Kunststofflaminate und/oder andere technische Laminate, mit einem starren Pressgestell, mit an Lagerbrücken des Pressgestells drehbar gelagerten Umlenkrollen, mit einem oberen und einem unteren, über die Umlenkrollen geführten endlosen Pressband realisiert, wobei zwischen den einander gegenüberliegenden Außenseiten der Pressbänder eine Reaktionszone gebildet ist, in der die Materialbahnen geführt und unter einem Flächendruck verpresst werden, wobei die Doppelbandpresse zudem eine zumindest teilweise den Flächendruck erzeugende Druckkammer aufweist, die zwischen einem Grundelement, insbesondere einer Heizplatte, und einer Innenseite des Pressbands im Bereich der Reaktionszone ausgebildet ist, welche mit einem fluiden Druckmittel beaufschlagbar ist und durch zumindest eine ringförmige, in sich geschlossene Gleitflächendichtung seitlich begrenzt und insbesondere abgedichtet wird, wobei die Gleitflächendichtung eine Dichtfläche zur dichtenden Anlage an der Innenseite des Pressbands aufweist und in einer Anpressrichtung beweglich in dem Grundelement gelagert ist, wobei die Lagerung ein zumindest teilweise elastisches, bewegliches Anpresselement umfasst, welches durch eine grundelementseitige Druckbeaufschlagung die Gleitflächendichtung mit der Dichtfläche in Anpressrichtung gegen die Innenseite des Pressbandes presst und welche dadurch gekennzeichnet ist, dass die Gleitflächendichtung nach einer der vorangehend beschriebenen Ausführungsformen ausgestaltet ist, also neben dem Dichtelement und dem Dichtrahmen zumindest ein in Anpressrichtung zwischen Dichtelement und Dichtrahmen angeordnetes Kompressionselement aufweist.

Mit der erfindungsgemäßen Doppelbandpresse werden, wie oben bereits erläutert Vorteile hinsichtlich des Verpressens von Pressgut mit Unterformat sowie Vorteile hinsichtlich der Qualität der hergestellten Materialbahnen erreicht. Bezüglich der vorteilhaften Ausgestaltungen und der damit einhergehenden bevorzugten Wirkweise wird auf die obigen Ausführungen zu den Gleitflächendichtungen verwiesen.

Gemäß einer vorteilhaften Ausgestaltung der Doppelbandpresse ist zudem vorgesehen, dass die Doppelbandpresse zumindest zwei abschnittsweise zueinander parallele, in sich geschlossene ringförmige Gleitflächendichtungen gemäß einer der oben beschriebenen Ausführungsform aufweist. Dadurch kann die Leckage weiter verringert bzw. gewollt aus der Druckkammer über die erste Gleitflächendichtung in einen Zwischenraum zwischen der ersten Gleitflächendichtung und der zweiten Gleitflächendichtung leckendes Druckmittel über eine Unterdruck im Zwischenraum abgesaugt werden.

Vorteilhafte Ausgestaltungen der Erfindung ergeben sich aus der nachfolgenden Beschreibung der schematischen Zeichnungen.

Diese zeigen:
- Fig. 1: eine Schnittdarstellung längs einer Gleitflächendichtung im Eintrittsbereich einer Doppelbandpresse gemäß dem Stand der Technik;
- Fig. 2: eine schematische Darstellung eines Ausschnitts einer Schnittzeichnung durch eine Doppelbandpresse im Bereich der Gleitflächendichtungen gemäß dem Stand der Technik;
- Fig. 3: eine schematische Draufsicht auf eine Innenseite einer Doppelbandpresse aus Blickrichtung eines Grundelements gemäß dem Stand der Technik;
- Fig. 4: ein schematischer Ausschnitt aus einer Schnittdarstellung einer Doppelbandpresse im Bereich der Gleitflächendichtung gemäß der vorliegenden Erfindung;
- Fig. 5a: eine schematische Darstellung eines Ausschnitts einer Seitenansicht einer Gleitflächendichtung gemäß einer Ausführungsform der vorliegenden Erfindung;
- Fig. 5b: eine schematische Schnittdarstellung durch die Schnittebene AA der Darstellung der Fig. 5a; und
- Fig. 6: eine Schnittdarstellung längs einer Gleitflächendichtung im Eintrittsbereich einer Doppelbandpresse gemäß der vorliegenden Erfindung.

Gleiche Elemente bzw. Elemente mit der gleichen Funktion sind in den Figuren mit den gleichen Bezugsziffern versehen.

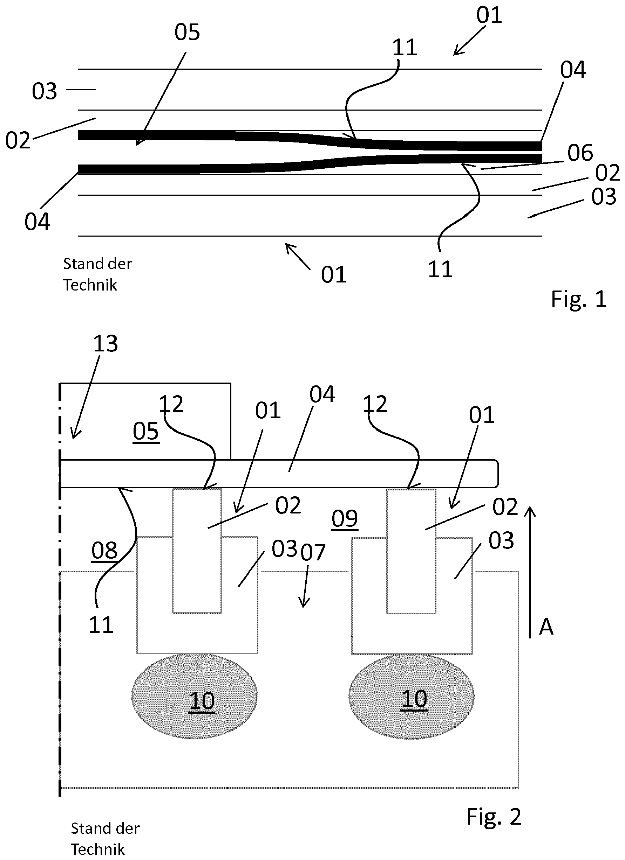

Die Fig. 1 zeigt eine obere und eine untere Gleitflächendichtung 01 im Eintrittsbereich einer Doppelbandpresse, welche in der Darstellung der Fig. 1 nicht gezeigt ist. Die Gleitflächendichtung 01 umfasst dabei ein Dichtelement 02 sowie einen Dichtrahmen 03, wobei der Dichtrahmen 03 in bekannter Weise von einem Grundelement, insbesondere einer Heizplatte aufgenommen und darin beweglich gelagert ist. Das Grundelement ist aus Gründen der Übersichtlichkeit in der Darstellung der Fig. 1 ebenfalls nicht gezeigt. Zwischen der Gleitflächendichtung 01, dem in der Fig. 1 nicht dargestellten Grundelement und den Pressbändern 04 der Doppelbandpresse wird eine Druckkammer ausgebildet, welche mit einem fluiden Druckmittel beaufschlagt wird, um insbesondere die Pressbänder 04 gegen das Pressgut 05 zu pressen.

In der Darstellung der Fig. 1 verläuft die Rotationsrichtung oder Umlaufrichtung der Pressbänder 04 im dargestellten Abschnitt der Fig. 1, beispielsweise in die Zeichenebene hinein und in einem jeweils oberhalb oder unterhalb zum Ausschnitt der Darstellung verlaufenden Bereich entsprechend aus der Zeichenebene der Fig. 1 heraus. In der beispielhaften Darstellung der Fig. 1 ist das Pressgut 05 mit einer geringeren Breite ausgestattet, als die Breite der Gleitflächendichtung im Eintrittsbereich oder das Pressgut 05 weist eine geringere Breite auf als die Abstände der Gleitflächendichtung in Längsrichtung der Doppelbandpresse oder in Rotationsrichtung der Pressbänder der Doppelbandpresse. Das entsprechende Unterformat des Pressguts 05 führt, wie in der Fig. 1 dargestellt ist, dazu, dass aufgrund der herkömmlichen oder bekannten Gleitflächendichtungen 01 mit einer mangelnden oder unzureichenden Flexibilität zwischen der Gleitflächendichtung 01, insbesondere zwischen dem Dichtelement 02 und dem Pressband 04 in dem Bereich, in dem kein Pressgut 05 vorgesehen oder vorhanden ist, ein Leckspalt 06 ausgebildet wird, der zu einem übermäßigen und unerwünschten Verlust von Druckmitteln aus der Druckkammer führt. Dementsprechend kann mit einer Doppelbandpresse und einer Gleitflächendichtung 01 gemäß dem Stand der Technik, wie sie in der Fig. 1 dargestellt ist, ein Pressgut 05 mit einem Unterformat nur verpresst und entsprechende Materialbahnen hergestellt werden, wenn dessen Dicke nur wenige Zehntel Millimeter beträgt.

Zudem haben die bekannten Gleitflächendichtungen 01, wie sie mit Bezug auf die Fig. 2 noch näher erläutert werden, den Nachteil, dass eine ungleichmäßige Anpresswirkung oder ein ungleichmäßiger Anpressdruck auf die Pressbänder 04, insbesondere im Eintrittsbereich und im Austrittsbereich der Doppelbandpresse erzeugt wird, was dazu führen kann, dass sichtbare Streifen in den hergestellten Materialbahnen erzeugt werden.

Die Fig. 2 zeigt einen Ausschnitt einer Schnittdarstellung einer Doppelbandpresse gemäß des Standes der Technik. Die Doppelbandpresse umfasst dabei zwei Gleitflächendichtungen 01, welche parallel zueinander verlaufen und welche ebenfalls ein Dichtelement 02 und einen Dichtrahmen 03 zur Aufnahme des Dichtelements 02 aufweisen. Zwischen dem Pressband 04 und dem Grundelement 07 werden durch die Gleitflächendichtungen 01 verschiedene Druckräume ausgebildet. Einerseits wird innerhalb der ersten oder inneren Gleitflächendichtung 01 eine Druckkammer 08 ausgebildet, welche mit einem fluiden Druckmittel beaufschlagbar ist. Bei bekannten Doppelbandpressen kann die Druckkammer 08 bevorzugt mit bis zu 80bar Druck beaufschlagt werden. Zwischen der ersten oder inneren Gleitflächendichtung 01 und der zweiten oder äußeren Gleitflächendichtung 01 ist ein Unterdruckraum 09 ausgebildet, der entsprechend mit einem Unterdruck beaufschlagt werden kann, beispielsweise um aus der Druckkammer leckendes Druckmittel abzusaugen oder abzuführen. Die Gleitflächendichtungen 01 sind in dem Grundelement 07 beweglich gelagert, indem die Dichtrahmen 03 in einer Ausnehmung des Grundelements 07 beweglich geführt sind. Die Dichtwirkung der Dichtelemente 01 gegenüber dem Pressband 04 wird insbesondere dadurch bewirkt, dass die Gleitflächendichtungen 01 grundelementseitig mit einem Druck beaufschlagt werden. Im Beispiel der Fig. 2 kann beispielsweise vorgesehen sein, dass die ebenfalls im Grundelement 07 beweglich gelagerten Anpresselemente 10, welche beispielsweise als elastische O-Ringe aus FKM- und/oder FFKM-Material ausgebildet sein können, grundelementseitig mit einem Druck beaufschlagt werden, sodass der Druck über die Anpresselemente 10 auf die Gleitflächendichtungen 01, insbesondere auf die Dichtrahmen 03 der Gleitflächendichtungen 01 übertragen werden, sodass die mit dem Dichtrahmen 03 verbundenen Dichtelemente 02 ihrerseits durch den Druck an die Innenseite 11 des Pressbands 04 angepresst werden. Dementsprechend bildet das Dichtelement 02 im Kontaktbereich zur Innenseite 11 des Pressbandes 04 eine Dichtfläche 12 aus.

Zwischen den Druckkammern 08 und begrenzt von der inneren Gleitflächendichtung 01 wird zwischen den Pressbändern 04, insbesondere zwischen den sich gegenüberliegenden Außenseiten der Pressbänder 04 die Reaktionszone 13 ausgebildet, in der aus dem Pressgut 05 die Materialbahnen hergestellt werden. Wie in der Fig. 2 skizziert, muss dabei das Pressgut 05 mit einem Überformat hergestellt oder gefahren werden, um die in der Fig. 1 dargestellte Ausbildung des Leckspalts 06 zu verhindern, die entsteht, wenn das Pressgut mit einem Unterformat durch die Doppelbandpresse geführt wird. Dies bedeutet, dass das Pressgut 05 eine Breite aufweisen muss, die zumindest über die Reaktionszone, und damit zumindest über die innere Gleitflächendichtung 01, in den Seiten oder Längsbereichen der Doppelbandpresse und der Gleitflächendichtung 01 hinausragt.

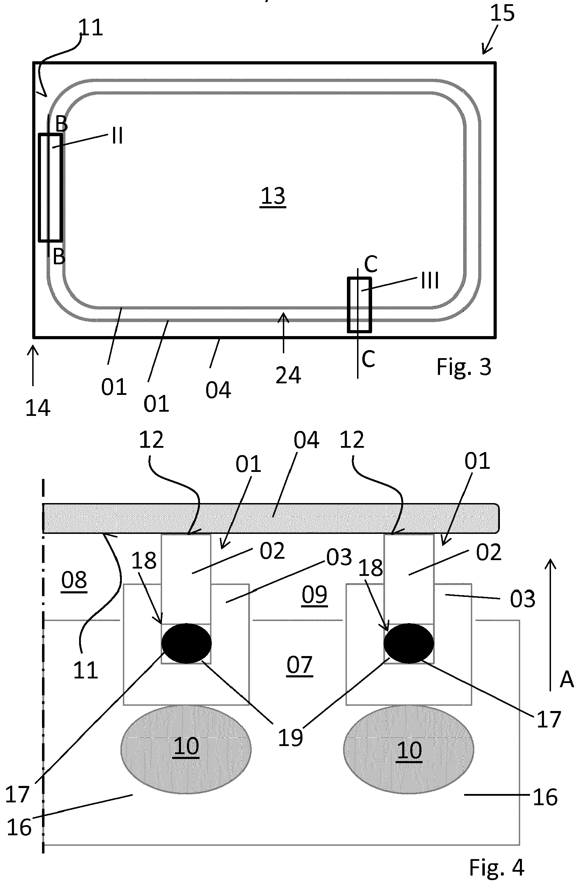

Die Fig. 3 zeigt eine schematische Draufsicht auf eine Innenseite 11 eines Pressbandes, ausgehend von einer in der Fig. 3 nicht dargestellten Heizplatte oder einem Grundelement 07. Die Darstellung der Fig. 1 ist beispielsweise dem Bereich II. entlang der Schnittebene BB entnommen. Die Darstellung der Fig. 2 ist beispielsweise dem Bereich III. entlang der Schnittebene CC entnommen. Dementsprechend befindet sich auf der linken Seite der Innenseite 11 des Pressbands 04 der Eintrittsbereich 14 in die Doppelbandpresse und im rechten Bereich der Austrittsbereich 15 der Doppelbandpresse. Ebenfalls ist in der Fig. 3 eine innere Gleitflächendichtung 01 und eine äußere Gleitflächendichtung 01 dargestellt, welche jeweils ringförmig und in sich geschlossen ausgestaltet sind, wobei zumindest die innere Gleitflächendichtung 01 seitlich, also im rechten Winkel zur Zeichenebene der Fig. 3 die Reaktionszone 13 begrenzt und auch weitestgehend abdichtet.

Die Fig. 4 zeigt einen Ausschnitt aus einer Schnittdarstellung durch eine erfindungsgemäße Doppelbandpresse umfassend zwei erfindungsgemäße Gleitflächendichtungen 01. Die Darstellung der Fig. 4 entspricht im Wesentlichen der Darstellung der Fig. 2. Identische Elemente der Gleitflächendichtungen 01 sowie die Doppelbandpresse werden mit identischen Bezugszeichen versehen und beschrieben. Wie auch bereits in der Fig. 2 sind die Gleitflächendichtungen 01 über eine Ausnehmung 16 im Grundelement 07 beweglich gelagert, wobei ein grundelementseitiger Druck über die Anpresselemente 10 auf die Gleitflächendichtungen 01, insbesondere auf die Dichtrahmen 03 übertragen wird, sodass letzten Endes die Dichtflächen 12 der Dichtelemente 02 gegen die Innenseite 11 des Pressbandes 04 gepresst werden.

Im Gegensatz zur Realisierung der Gleitflächendichtungen 01 gemäß des Standes der Technik, wie sie in der Darstellung der Fig. 2 wiedergegeben sind, umfassen die Gleitflächendichtungen 01 gemäß der vorliegenden Erfindung ein Kompressionselement 17, welches eine Relativbewegung des Dichtelements 02 gegenüber dem Dichtrahmen 03 ermöglicht, insbesondere in Reaktion auf eine Druckbeaufschlagung der Gleitflächendichtung 01 in Anpressrichtung A, wobei das Kompressionselement 17 eine elastische Kompression erfährt oder vollführt, um die Relativbewegung zwischen dem Dichtelement 02 und dem Dichtrahmen 03 zu ermöglichen. Das Kompressionselement 17 ist dabei in einer Nut 18 des Dichtrahmens 03 angeordnet. Insbesondere ist das Kompressionselement 17 entlang des Nutgrundes 19 der Nut 18 des Dichtrahmens 03 angeordnet. Dementsprechend dient die Nut 18 mit dem Nutgrund 19 sowohl zur zumindest teilweisen Aufnahme und Führung des Dichtelements 02 sowie gleichzeitig zur Aufnahme und Führung des Kompressionselements 17. In erfindungswesentlicher Weise wird durch das Kompressionselement 17 erreicht, dass ein seitens des Grundelements 07 auf die Ausnehmung 16 im Grundelement ausgeübter Druck über das Anpresselement 10 und den Dichtrahmen 03 über das Kompressionselement 17 auf das Dichtelement 02 und dessen Dichtfläche 12 übertragen wird, sodass in Abhängigkeit vom Widerstand des Pressbandes 04 der Druck zu einer mehr oder weniger stark ausgeprägten Kompression des Kompressionselements innerhalb der Nut 18 des Dichtrahmens 03 führt, sodass zwar einerseits eine Anpresskraft der Dichtfläche 12 auf die Innenseite 11 des Pressbandes 04 ausgeübt wird, andererseits jedoch das Dichtelement 02 gegenüber dem Dichtrahmen 03 zumindest über einen gewissen Hub, der durch die Kompressionsfähigkeit und Verformbarkeit des Kompressionselements 17 bestimmt wird, beweglich ausgeführt ist, sodass die Gleitflächendichtung 01 insgesamt eine Flexibilisierung, insbesondere eine lokale Flexibilisierung erfährt, sodass ein gleichmäßigerer Druck über die Dichtfläche auf die Innenseite 11 des Pressbandes 04 ausgeübt werden kann und dass zudem eine bessere Anpassbarkeit und Anpressfähigkeit an eine lokale Konturänderung des Pressbandes 04, insbesondere auch eine Innenseite 11 des Pressbandes gewährleistet wird. Das Kompressionselement 17 ist bevorzugt als in sich geschlossener O-Ring ausgeführt, welcher aus einem Material gefertigt ist, das den Betriebstemperaturen der Doppelbandpresse und der am Ort der Gleitflächendichtungen herrschenden Temperaturen standhalten kann und gleichzeitig die gewünschte Funktionalität als elastisches Kompressionselement leisten kann.

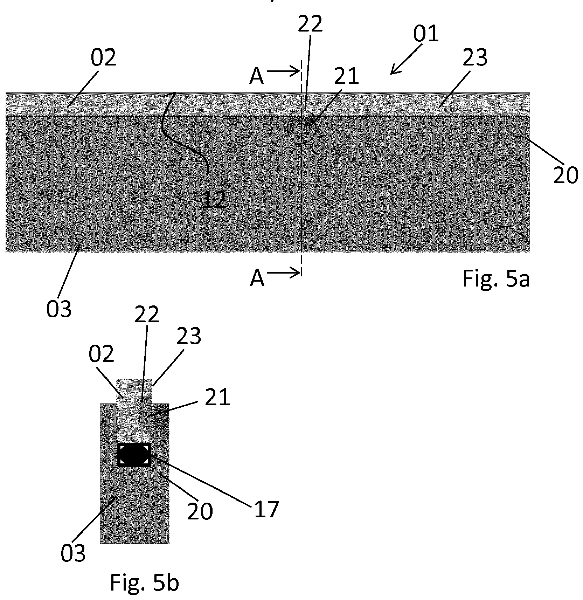

Fig. 5a zeigt eine Seitenansicht auf einen Ausschnitt einer erfindungsgemäßen Gleitflächendichtung gemäß einer bevorzugten Ausführungsform. In der Seitenansicht zu erkennen ist einerseits der Dichtrahmen 03 sowie das vom Dichtrahmen 03 zumindest teilweise aufgenommene Dichtelement 02. Das Dichtelement 02 weist dabei die Dichtfläche 12 auf, welche in der Seitenansichtsdarstellung der Fig. 5a oben angeordnet ist. Im oberen Abschnitt des Dichtrahmens 03 ist in der Fig. 5a eine Verstemmung dargestellt, die beispielsweise als kreis- oder punktförmige Verstemmung ausgeführt ist, und welche derart im oberen Bereich einer Seitenwand 20 des Dichtrahmens 03 angeordnet ist, dass das durch die Verstemmung 21 in Richtung des Inneren des Dichtrahmens 03 verdrängte Material in ein Sackloch 22 eingreift und somit eine Sicherung und/oder Befestigung des Dichtelements 02 gegenüber dem Dichtrahmen 03 bewerkstelligt oder ermöglicht.

Wie in der Fig. 5a bereits angedeutet, ist dabei das Sackloch 22, welches ebenfalls in einer Seitenfläche 23 des Dichtelements 02 angeordnet ist, größer dimensioniert als das im Rahmen der Verstemmung in das Innere der Nut 18 des Dichtrahmens 03 hineinragende Material oder Verformungsabschnitt. Diese Dimensionierung des Sackloches 22 gegenüber der Verstemmung 21 dient dazu, dass die Relativbewegung des Dichtrahmens gegenüber dem Dichtelement 02, welche insbesondere durch das erfindungsgemäße Kompressionselement 17 ermöglicht wird, durch die Verstemmung des Dichtrahmens 03 gegenüber dem Dichtelement 02 nicht aufgehoben oder über Gebühr eingeschränkt wird. Dementsprechend sind die Verstemmung 21 und das Sackloch 22 derart dimensioniert, dass eine Relativbewegung des Dichtelements 02 gegenüber dem Dichtrahmen 03, insbesondere durch eine Kompression des Kompressionselements 17, bis zu einem Maximalhub ermöglicht wird und darüber hinaus eine Sicherung des Dichtelements 02 gegenüber dem Dichtrahmen 03 bewirkt wird. Dies bedeutet insbesondere, dass im Längsbereich 24 der Gleitflächendichtungen 01, wie sie beispielsweise in der Fig. 3 dargestellt sind, die Verstemmung 21 und die Sacklöcher 22 der Gleitflächendichtung 01 derart zusammenarbeiten, dass ein Verschieben der Dichtelemente 02 im Dichtrahmen 03 entlang der Längsrichtung der Nut 18 des Dichtrahmens 03 verhindert wird. Dementsprechend können die Verstemmungen, wie oben bereits erwähnt, punktförmig ausgestaltet sein oder entsprechend zu kreisförmigen Fortsätzen oder Erhebungen auf einer Seitenfläche der Nut 18 führen, wobei das Sackloch 22 beispielsweise als Langloch ausgebildet ist, sodass die Verstemmung eine Bewegung oder Verschiebung des Dichtelements 02 entlang der Längsrichtung der Nut 18 verhindert, wohingegen die Verstemmung 21 eine Bewegung des Dichtelements in Anpressrichtung, also senkrecht auf dem Nutgrund 19 der Nut 18 ermöglicht.

Die entsprechende Ausgestaltung eines Sacklochs 22 sowie der Verstemmung 21 in der Seitenwand 20 des Dichtrahmens 03 sind ebenfalls in der Schnittdarstellung der Fig. 5b erkenntlich, die einen Schnitt entlang der Ebene AA der Fig. 5a zeigt.

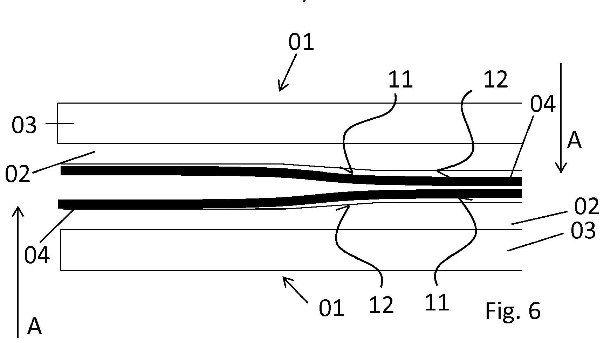

Durch das erfindungsgemäße Kompressionselement 17 zur Flexibilisierung des Dichtelements der Gleitflächendichtung wird insbesondere ein dem Ein- und Austrittsbereich der Doppelbandpresse, also in den Bereichen, in denen das Pressgut 05 senkrecht zu der Rotationsrichtung der Doppelbandpresse verläuft und geführt wird, eine Anpress- und Dichtsituation erzeugt, wie sie beispielhaft in dem Ausschnitt dargestellt ist, der in der Fig. 6 schematisiert dargestellt ist. Der Ausschnitt der Schnittdarstellung der Fig. 6 kann beispielsweise ebenfalls dem Bereich II. der Fig. 3 entnommen und entlang der Achse B verlaufen. Dargestellt sind, wie bereits in Fig. 1, die beiden Pressbänder 04 der Doppelbandpresse sowie die an den Pressbändern 04 an der Innenseite 11 der Pressbänder anliegenden oder angepressten Gleitflächendichtungen 01. Auch im Beispiel der Fig. 6 soll das Pressgut 05 mit einem Unterformat in die Doppelbandpresse eingeführt werden, sodass das Pressgut 05 sich nicht über die volle Breite der Pressbänder 04 erstreckt, sondern insbesondere innerhalb der durch die Längsabschnitte der Gleitflächendichtung 01 und deren Abstand zueinander gebildete Breite der Reaktionszone 13 endet. Dadurch, dass jedoch zwischen dem jeweiligen Dichtelement 02 der Gleitflächendichtung 01 und dem Dichtrahmen 03 der Gleitflächendichtung 01 das in der Schnittdarstellung der Fig. 6 nicht dargestellte Kompressionselement 17 angeordnet ist und eine Relativbewegung des Dichtelements 02 gegenüber dem Dichtrahmen 03 ermöglicht, wird eine Flexibilisierung des Dichtelements 02 erreicht, die wiederum dazu führt, dass das Dichtelement 02 durch den auf die Gleitflächendichtung 01 aufgebrachten Anpressdruck in Anpressrichtung A sich dem Verlauf des Pressbandes 04 besser anpassen kann bzw. umgekehrt die Anpressdrücke der Dichtflächen 12 auf die Innenseite 11 der Pressbänder 04 in Verbindung mit den nicht dargestellten Kompressionselementen 17 die ungleichmäßige Oberfläche oder den ungleichmäßigen Verlauf der Pressbänder, insbesondere der Innenseite 11 der Pressbänder 04 besser nachbilden können und gleichzeitig einen homogeneren Druck auf die Innenseite 11 der Pressbänder 04 auswirken können. Damit wird, wie in der Fig. 6, insbesondere im Vergleich mit der Fig. 1 ersichtlich ist, erreicht, dass der in der Fig. 1 ausgebildete Leckspalt 06 durch die variable Anpassung des Dichtelements 02 an den Verlauf des Pressbandes 04 verhindert wird, sodass einerseits die Doppelbandpresse mit Pressgut in Unterformat betrieben werden kann und andererseits ein gleichmäßiger Anpressdruck von den Gleitflächendichtungen 01 auf die Innenseite 11 der Pressbänder 04 ausgeübt wird.

Die Relativbewegung und auch die abschnittsweise oder lokale Möglichkeit einer Relativbewegung des Dichtelements 02 gegenüber dem Dichtrahmen 03 durch das Vorsehen des Kompressionselements 17 ist auch in der Fig. 6 deutlich zu erkennen oder dargestellt, da über die Breite der Darstellung der Fig. 6 das Dichtelement 02 in unterschiedlichen Bereichen des Eintrittsbereichs der Bandpresse unterschiedlich stark aus dem Dichtrahmen 03 hervorragt, was durch eine wiederum lokale oder lokal unterschiedliche Kompression des Kompressionselements 17 erreicht oder ermöglicht wird.

### Bezugszeichen

- 01: Gleitflächendichtung
- 02: Dichtelement
- 03: Dichtrahmen
- 04: Pressband
- 05: Pressgut
- 06: Leckspalt
- 07: Grundelement
- 08: Druckkammer
- 09: Unterdruckraum
- 10: Anpresselement
- 11: Innenseite
- 12: Dichtfläche
- 13: Reaktionszone
- 14: Eintrittsbereich
- 15: Austrittsbereich
- 16: Ausnehmung
- 17: Kompressionselement
- 18: Nut
- 19: Nutgrund
- 20: Seitenwand
- 21: Verstemmung
- 22: Sackloch
- 23: Seitenfläche

## Patentansprüche

1. Gleitflächendichtung für eine kontinuierlich arbeitende Doppelbandpresse zur Herstellung von endlosen Materialbahnen, wie Laminaten, insbesondere Kupferlaminat, Dekorlaminat, faserverstärkte Kunststofflaminate und/oder andere technische Laminate, mit einem oberen und einem unteren, über Umlenktrommeln geführten, endlosen Pressband (04), wobei zwischen den einander gegenüberliegenden Außenseiten der Pressbänder eine Reaktionszone (13) gebildet wird, in der die Materialbahn geführt und unter einem Flächendruck verpresst wird, mit einer zumindest teilweise den Flächendruck erzeugenden Druckkammer (08), die zwischen einem Grundelement (07), insbesondere einer Heizplatte, und einer Innenseite (11) des Pressbands (04) in der Reaktionszone (13) ausgebildet ist, welche mit einem fluiden Druckmittel beaufschlagbar ist und durch die zumindest eine ringförmige, in sich geschlossene Gleitflächendichtung (01) seitlich begrenzt und abgedichtet wird, wobei die Gleitflächendichtung (01) eine Dichtfläche (12) zur dichtenden Anlage an der Innenseite (11) des Pressbands (04) aufweist und die Gleitflächendichtung (01) ein die Dichtfläche (12) ausbildendes Dichtelement (02) und einen das Dichtelement (02) zumindest teilweise aufnehmenden Dichtrahmen (03) zur beweglichen Lagerung der Gleitflächendichtung (01) in dem Grundelement (07), insbesondere in der Heizplatte aufweist,
**dadurch gekennzeichnet,**
**dass** zwischen Dichtrahmen (03) und Dichtelement (02) zumindest in einer Anpressrichtung ein Kompressionselement (17) angeordnet ist, welche durch eine elastische Kompression, insbesondere in Reaktion auf eine Druckbeaufschlagung der Gleitflächendichtung (01) in Anpressrichtung, eine Relativbewegung des Dichtelements (02) gegenüber dem Dichtrahmen (03) ermöglicht.

2. Gleitflächendichtung nach Anspruch 1,
**dadurch gekennzeichnet,**
**dass** das Kompressionselement (17) als in sich geschlossener O-Ring oder als eingelegte nicht geschlossene Dichtschnur mit kreisförmigen Querschnitt ausgebildet ist.

3. Gleitflächendichtung nach Anspruch 1 oder 2,
**dadurch gekennzeichnet,**
**dass** der Dichtrahmen (03) eine Nut (18) zur Aufnahme des Dichtelements aufweist, wobei entlang eines Nutgrundes (19) der Nut (18) das Kompressionselement (17) angeordnet ist.

4. Gleitflächendichtung nach einem der Ansprüche 1 bis ,
**dadurch gekennzeichnet,**
**dass** das Dichtelement (02) zumindest abschnittsweise aus einem Werkstoff mit geringem E-Modul, insbesondere einem Polymer oder einem Metall.

5. Gleitflächendichtung nach einem der Ansprüche 1 bis 4,
**dadurch gekennzeichnet,**
**dass** das Dichtelement zumindest abschnittsweise auf einer an der Dichtfläche (12) angrenzenden Seitenfläche (23) Sacklöcher (22) oder Einfräsungen aufweisen, wobei der Dichtrahmen (03) Verstemmungen (21) aufweist, die zumindest teilweise in die Sacklöcher eingreifen und eine Sicherung des Dichtelements gegenüber dem Dichtrahmen (03) bewirken.

6. Gleitflächendichtung nach Anspruch 5,
**dadurch gekennzeichnet,**
**dass** die Sacklöcher und die Verstemmung (21) so zueinander dimensioniert sind, dass die Relativbewegung des Dichtelements gegenüber dem Dichtrahmen (03) durch eine Kompression des Kompressionselements (17) bis zu einem Maximalhub ermöglicht und darüber hinaus eine Sicherung des Dichtelements (02) gegenüber dem Dichtrahmen (03) bewirkt wird.

7. Kontinuierlich arbeitende Doppelbandpresse zur Herstellung von endlosen Materialbahnen, wie Laminaten, insbesondere Kupferlaminat, Dekorlaminat, faserverstärkte Kunststofflaminate und/oder andere technische Laminate, mit einem starren Pressengestell, mit an Lagerbrücken des Pressengestells drehbar gelagerten Umlenktrommeln, mit einem oberen und einem unteren, über die Umlenktrommeln geführten, endlosen Pressband (04), wobei zwischen den einander gegenüberliegenden Außenseiten der Pressbänder eine Reaktionszone (13) gebildet ist, in der die Materialbahn geführt und unter einem Flächendruck verpresst wird, mit einer zumindest teilweise den Flächendruck erzeugenden Druckkammer (08), die zwischen einem Grundelement (07), insbesondere einer Heizplatte, und einer Innenseite (11) des Pressbands (04) im Bereich der Reaktionszone (13) ausgebildet ist, welche mit einem fluiden Druckmittel beaufschlagbar ist und durch zumindest eine ringförmige, in sich geschlossene Gleitflächendichtung (01) seitlich begrenzt und insbesondere abgedichtet wird, wobei die Gleitflächendichtung (01) eine Dichtfläche (12) zur dichtenden Anlage an der Innenseite (11) des Pressbandes (04) aufweist und in einer Anpressrichtung beweglich in dem Grundelement (07) gelagert ist, wobei die Lagerung ein zumindest teilweise elastisches, bewegliches Anpresselement (10) umfasst, welches durch eine grundelementseitige Druckbeaufschlagung die Gleitflächendichtung (01) mit der Dichtfläche (12) in Anpressrichtung gegen die Innenseite (11) des Pressbandes (04) presst,
**gekennzeichnet durch**
eine Gleitflächendichtung (01) nach einem der Ansprüche 1 bis 6.

8. Doppelbandpresse nach Anspruch 7,
**gekennzeichnet durch**
zwei zumindest abschnittsweise zueinander parallele, in sich geschlossene ringförmige Gleitflächendichtungen (01) nach einem der Ansprüche 1 bis 7.
